# EUROPÄISCHE PATENTSCHRIFT

(11) **EP 3 899 879 B1**
(45) Veröffentlichungstag und Bekanntmachung des Hinweises auf die Patenterteilung: **10.06.2026**
(21) Anmeldenummer: 19836483.8
(22) Anmeldetag: 18.12.2019
(51) Int. Cl.: G07C 5/08, G07C 5/00, F16H 59/00

(54) **VERFAHREN SOWIE SYSTEM ZUM TYPISIEREN VON KRAFTFAHRZEUGEN**
METHOD AND SYSTEM FOR TYPING MOTOR VEHICLES
PROCÉDÉ ET SYSTÈME POUR CLASSIFIER DES VÉHICULES AUTOMOBILES EN TYPES

(30) Priorität: 20.12.2018 DE 102018222537
(43) Veröffentlichungstag der Anmeldung: 27.10.2021
(73) Patentinhaber: ZF Friedrichshafen AG, 88046 Friedrichshafen (DE)
(72) Erfinder: ZEREY, Mazlum, 66113 Saarbrücken (DE); KIRST, Christoph, 66787 Wadgassen (DE); JOCHEM, Stefan, 66333 Voelklingen (DE)
(86) Internationale Anmeldenummer: PCT/EP2019/085823
(87) Internationale Veröffentlichungsnummer: WO 2020/127402

(56) Entgegenhaltungen:
- EP-A2- 1 013 510
- DE-A1- 10 057 972
- DE-A1- 10 327 031
- DE-A1- 102008 040 284
- DE-A1- 102013 204 128
- DE-A1- 3 817 495
- DE-B4- 10 327 031
- DE-T5- 112016 006 295
- US-A1- 2010 063 697
- US-A1- 2017 228 946

## Beschreibung

Die Erfindung betrifft ein Verfahren zum Typisieren von Kraftfahrzeugen. Die Erfindung betrifft ferner ein System zum Typisieren von Kraftfahrzeugen.

Mittels drahtloser Kommunikationswege ist es möglich, einzelne Fahrzeuge bzw. Kraftfahrzeuge nicht nur im laufenden Fahrbetrieb durch Einsatz von im Fahrzeug vorhandener Sensorik zu überwachen und dabei Zustandsdaten zu erfassen, sondern diese Daten über die bestehenden Kommunikationswege auch einer zentralen Auswertung und Analyse zur Verfügung zu stellen. Die Auswertung und Analyse kann z.B., wie dies in der EP 2 607 144 A1 beschrieben ist, über einen Zentralrechner beim Fahrzeughersteller erfolgen. Über das Erfassen von Fahrzeugzustandsdaten lassen sich insbesondere Einstellungen oder Funktionen der im Fahrzeug verbauten Komponenten feststellen, und daraus z. B. Hinweise an den Fahrer ableiten. Die Kenntnis der technischen Einstellungen im Fahrzeug kann außerdem für den Fahrzeughersteller oder für dessen Zulieferer von Fahrzeugkomponenten von Interesse sein. Die Dokumente DE112016006295 T5 und DE3817495 A1 offenbaren Verfahren und Systeme zum Typisieren von Kraftfahrzeugen gemäß dem Stand der Technik.

Es ist Ziel der Erfindung, die im Kraftfahrzeug mittels dort vorhandener Überwachungssensorik erlangbaren Kenntnisse der technischen Einstellungen und Funktionen weitergehender nutzbar zu machen, insbesondere auch für den Nutzer des Kraftfahrzeugs.

Zur Lösung dieser Aufgabe wird ein Verfahren mit den Merkmalen des Patentanspruchs 1, und ein System mit den Merkmalen des Patentanspruchs 7 vorgeschlagen.

Zum Aufbau einer Datenbank, welche die Grundlage für Typisierung einzelner Kraftfahrzeuge ist, werden an einer Vielzahl von Fahrzeugen mit darin verbauten Getrieben Getriebedaten messtechnisch erfasst. Die erfassten Getriebedaten sind von solcher Art, dass sie von Relevanz für das Schaltverhalten der Getriebe im realen Fahrbetrieb der Fahrzeuge sind, also für Getriebeeinstellungen und -funktionen. Gemeinsam ist den für die Datenerfassung herangezogenen Fahrzeugen, dass sie mit bauartgleichen Getrieben ausgerüstet sind oder zumindest mit Getrieben, die hinsichtlich ihrer Funktion vergleichbar sind.

Die Getriebe sind bevorzugt Automatikgetriebe. Automatikgetriebe sind in ihrer Schaltcharakteristik auf einen durchschnittlichen Nutzerkreis abgestimmt. Es werden auch Automatikvarianten angeboten, bei denen der Fahrer zwischen unterschiedlichen Automatik-Fahrprogrammen wählen kann, z. B. zwischen einem Normalprogramm, einem ökologisch orientierten Schaltprogramm, welches auf ein besonders treibstoffeffizientes Fahren ausgerichtet ist, und einem Sportprogramm, welches z. B. mit kürzeren Schaltvorgängen und bei allgemein höherer Motordrehzahl arbeitet.

Viele Fahrzeughalter nutzen diese Möglichkeiten allerdings nicht, sondern bevorzugen in der täglichen Fahrpraxis "ihr" Fahrprogramm. Vor diesem Hintergrund ist angestrebt, dem einzelnen Fahrer eine gleichsam maßgeschneiderte Parametrierung des in seinem Fahrzeug arbeitenden Automatikgetriebes zu bieten, also eine Getriebesteuerung, die dem individuellen Fahrstil des jeweiligen Fahrers entspricht oder diesem entgegenkommt.

In einer Datenbank, vorzugsweise in einer Datenbank des Fahrzeugherstellers, wird auf Grundlage der in dem Feldversuch erfassten Daten eine Klassifikation abgelegt, welche für bestimmte Gruppen von Fahrertypen, z. B. für eher zurückhaltende Fahrer oder für Fahrer, die eine eher sportliche Fahrweise bevorzugen, entsprechende Profile umfasst. Dabei umfasst jedes Profil eine Kombination ganz bestimmter, für dieses Profil charakteristischer Getriebeparameter. Die Getriebeparameter können z. B. die Schaltgeschwindigkeit beim Wechsel von Fahrstufe zu Fahrstufe des Getriebes sein, oder die in den einzelnen Fahrstufen minimal und maximal zugelassene Drehzahl.

Um die Klassifikation zu erstellen, werden Feldversuche mit einer Vielzahl von Kraftfahrzeugen durchgeführt, welche mit zumindest hinsichtlich ihrer Funktion vergleichbaren Getrieben ausgerüstet sind. Mittels in den Fahrzeugen des Feldversuchs vorhandener Datenerfassungseinrichtungen werden, z. B. über ein Betriebsintervall und/oder eine bestimmte Laufleistung, Getriebedaten der Fahrzeuge messtechnisch erfasst. Unter dem Begriff Getriebedaten werden hier Parameter von mechanischer oder steuerungstechnischer Art verstanden, die von Relevanz sind für das reale, also das in der Fahrpraxis festgestellte Schaltverhalten der jeweiligen Getriebe im Rahmen der Fahrsituationen des Feldversuchs.

Die Datenerfassung wird über ein für alle Fahrzeuge des Feldversuchs möglichst einheitlich vorgegebenes Betriebsintervall bzw. eine einheitlich vorgegebene Laufleistung der Fahrzeuge durchgeführt. Denn um zu einer hinreichend genauen Charakterisierung eines Fahrertypus zu gelangen, bedarf es der Berücksichtigung einer ausreichend großen Zahl an Fahrsituationen und insbesondere auch unterschiedlichen Fahrsituationen, während denen die Getriebedaten erfasst werden.

Daher erfolgt die Erfassung der Getriebedaten vorzugsweise nicht nur punktuell, sondern über ein vorgegebenes Betriebsintervall von ausreichender Länge, oder alternativ über eine vorgegebene Laufleistung des Fahrzeugs. Werden Getriebedaten z. B. über eine Laufleistung von 5.000 km erfasst, kann mit einer gewissen Wahrscheinlichkeit davon ausgegangen werden, dass der Großteil der für dieses Fahrzeug und für den Lenker des Fahrzeugs typischen Fahrsituationen Berücksichtigung gefunden hat, so dass von verlässlichen, für das Fahrzeug bzw. die Fahrweise des Fahrers charakteristischen Werten ausgegangen werden kann.

Die so bei einer großen Anzahl von Kraftfahrzeugen erfassten Getriebedaten werden an einen Zentralrechner übermittelt, z. B. mittels Telematik. Der Zentralrechner kann z. B. der Server des Fahrzeugherstellers oder seines Getriebelieferanten sein. Bestandteil des Zentralrechners ist eine Datenverarbeitung, welche aus den erfassten Getriebedaten Durchschnittswerte sowie die Größe und Häufigkeit von Abweichungen von den Durchschnittswerten errechnet.

Auf Grundlage der Durchschnittswerte sowie der Größe und Häufigkeit der Abweichungen von den Durchschnittswerten wird eine Klassifikation umfassend ein Standardprofil sowie mindestens zwei weitere Profile neben dem Standardprofil erstellt.

Das Erstellen der Klassifikation erfolgt zum Beispiel selbsttägig durch die Datenverarbeitung, kann jedoch auch durch eine fachmännische Beurteilung ersetzt, oder durch diese korrigiert werden.

Jedes Profil der Klassifikation zeichnet sich dadurch aus, dass es mittelbar einen bestimmten Fahrertypus und unmittelbar ein Fahrzeug virtuell charakterisiert, welches in der täglichen Fahrpraxis in einer bestimmten, charakteristischen Art und Weise bewegt wird. So kann z. B. das Standardprofil ein von seinem Fahrer primär komfortorientiert gefahrenes Fahrzeug virtuell charakterisieren. Ein solches Fahrzeug wird zumeist mäßig beschleunigt, frühzeitig abgebremst, und der Fahrer neigt selten dazu, die Gangstufen des Getriebes voll auszuschöpfen.

Neben dem Standardprofil enthält die Klassifikation mindestens zwei weitere Profile.

Ein weiteres Profil kann z. B. ein eine eher sportliche Fahrweise virtuell charakterisierendes Profil sein. Charakteristisch für eine solche Fahrweise ist ein spätes Hochschalten der einzelnen Gangstufen, ein oft starkes Beschleunigen aber auch Bremsen des Fahrzeugs, und allgemein das Fahren mit überdurchschnittlich hoher Motordrehzahl.

Auf Grundlage der Datenbank aus unterschiedlichen Profilen erfolgt eine Typisierung einzelner Fahrzeuge. Unter Typisierung wird die Einstufung eines einzelnen Fahrzeugs in eines der Profile der Klassifikation verstanden.

Zur Typisierung eines einzelnen Fahrzeugs erfasst eine in dem Fahrzeug vorhandene Datenerfassungseinrichtung über ein bestimmtes Betriebsintervall und/oder über eine bestimmte Laufleistung des Fahrzeugs dessen Getriebedaten, soweit diese Getriebedaten von Relevanz für das tatsächliche Schaltverhalten des Getriebes über das Betriebsintervall bzw. über die Laufleistung sind. Diese Datenerfassung kann hinsichtlich der Erfassungskriterien und der bei der Erfassung der Getriebedaten eingesetzten Sensorik ebenso eingerichtet sein wie die Datenerfassung, welche in den Fahrzeugen des Feldversuchs zum Aufbau der Datenbank und Erstellen der Klassifikation zum Einsatz kommt.

Insbesondere erfolgt das Erfassen der Getriebedaten mittels im Fahrzeug fest installierter Sensorik, beispielsweise mittels entsprechenden Messwertaufnehmern. Die so erfassten Daten sind solcherart, dass sie von unmittelbarer oder mittelbarer Aussagekraft für die Einstellungen und die Funktionen am Fahrzeuggetriebe des zu typisierenden Fahrzeugs in alltäglichen Fahrsituationen sind. Dies kann z. B. durch Messen der relativen Bewegung von Getriebebauteilen zueinander erfolgen, oder durch Messen von Schwingungen im Getriebe, oder durch Messen akustischer Größen oder anderer im Fahrbetrieb messtechnisch erfassbarer Eigenschaften der Bauteile oder Bauteilgruppen des Getriebes.

Das Erfassen der Getriebedaten erfolgt entweder lastabhängig, z. B. während oder im zeitlichen Umfeld von Schaltvorgängen, oder in kleineren oder in größeren Zeitabständen und damit periodisch. Ebenfalls möglich ist, unter Erfassung entsprechend größerer Datenmengen, eine laufende Überwachung des Getriebes, seiner Baugruppen oder einzelner Getriebefunktionen.

Die an dem zu typisierenden Fahrzeug erfassten Getriebedaten werden mittels vorhandener Kommunikationswege, z. B. mittels Telematik, an einen Zentralrechner oder eine Cloud beim Fahrzeughersteller oder beim Getriebelieferanten übermittelt. Die Übermittlung erfolgt als ein Datensatz bestehend aus den erfassten Getriebedaten, einer für das jeweilige Fahrzeug individuellen Kennung sowie Positionsdaten. Die Zuordnung der Daten zu einem konkret identifizierbaren Fahrzeug ist wichtig, um bei der Analyse und Auswertung der Daten auch bestimmte, in dem Fahrzeug verbaute Bauteile oder Komponenten zuordnen zu können.

Das Übermitteln und Speichern der Getriebedaten und auch deren Auswertung erfolgt zusammen mit der für das einzelne Fahrzeug, von dem die Getriebedaten stammen, individuellen Kennung. Diese Kennung oder Identifikation kann z. B. ein fahrzeugindividueller Digitalcode sein, evtl. ergänzt um einen Code, welcher für den jeweiligen Fahrzeugtyp oder für die überwachte Komponente im Fahrzeug steht, also für die in dem Fahrzeug verbaute Getriebeeinheit.

Eine Datenverarbeitung errechnet aus den Getriebedaten und den Positionsdaten durch prozessorgestützte Datenanalyse und -bewertung mindestens einen individuellen Kennwert für das einzelne Fahrzeug. Der Kennwert und vorzugsweise weitere Kennwerte ist bzw. sind von solcher Art und Größe, dass für das betreffende Fahrzeug dessen charakteristische, typische Getriebe-Schaltpraxis optimal gekennzeichnet ist.

Ausgehend von der Größe des errechneten Kennwerts oder der errechneten Kenn-werte führt die Datenverarbeitung dann die Typisierung des Fahrzeugs durch, indem das Fahrzeug in Abhängigkeit von der Größe des mindestens einen Kennwerts einem der Profile der Klassifikation zugeordnet wird.

Um möglichst vielen Fahrerprofilen gerecht zu werden, sollte auch die Klassifikation über entsprechend viele unterschiedliche Profile verfügen.

Die Datenverarbeitung ist eingerichtet, bei der Ermittlung des für das Fahrzeug individuellen Kennwerts neben den erfassten Getriebedaten auch die Fahrzeug-Positionsdaten zu verarbeiten. Diese sind aus über das Betriebsintervall oder die Laufleistung des Fahrzeugs aufgezeichneten Positionssignalen und insbesondere GPS-Signalen abgeleitet. Die Berücksichtigung auch der Positionsdaten verbessert die Ermittlung des Kennwerts deutlich, da bei Kenntnis der gefahrenen Strecken die erfassten Getriebedaten und deren Bezug zu dem reale Schaltverhalten über das Betriebsintervall bzw. über die Laufleistung besser zu beurteilen sind. Vorzugsweise umfassen die im Fahrzeug erfassten Getriebedaten weitere Daten
- zu Lastzuständen in den einzelnen Fahrstufen des Getriebes
- und/oder zu Temperaturen
- und/oder zu Schaltvorgängen einschließlich deren Zeitpunkten
- und/oder zur Ölversorgung des Getriebes
- und/oder zu Schwingungen oder Geräuschen in Getriebebauteilen
- und/oder zur mechatronischen Getriebesteuerung.

Gemäß einer Ausgestaltung erfolgt die Übermittlung der erfassten Getriebedaten von dem zu typisierenden einzelnen Fahrzeug über das Kommunikationsnetz zu der Datenverarbeitung über ein Telemetrie-Modul, mit dem das Fahrzeug ausgerüstet ist.

Vorzugsweise erfolgt auch die Übermittlung der Positionsdaten, z. B. der im Fahrzeug über die Zeit aufgezeichneten GPS-Signale, über das im Fahrzeug angeordnete Telemetrie-Modul. Die Signale zur Fahrzeugposition sind im Fahrzeug in einem Positionsdaten-Modul abgelegt.

Weitere Daten, welche bei der Ermittlung des für das Fahrzeug individuellen Kenn-werts verarbeitet werden, sind
- Daten zur Art des im Fahrzeug verbauten Antriebs
- und/oder Daten zur Nennleistung des im Fahrzeug verbauten Antriebs
- und/oder Daten zu gefahrenen Strecken
- und/oder Daten zu Tempobegrenzungen auf den gefahrenen Strecken
- und/oder Daten zu Fahrbahnbelägen auf den gefahrenen Strecken.

Gemäß einer weiteren Ausgestaltung wird der für das jeweilige Fahrzeug individuelle Kennwert zusammen mit der dem jeweiligen Fahrzeug zugeordneten Kennung bzw. Identifikation als ein Datensatz gespeichert. Ein Zugriff auf diesen Datensatz ist nur über eine Autorisierung möglich, um so einen Datenmissbrauch auszuschließen.

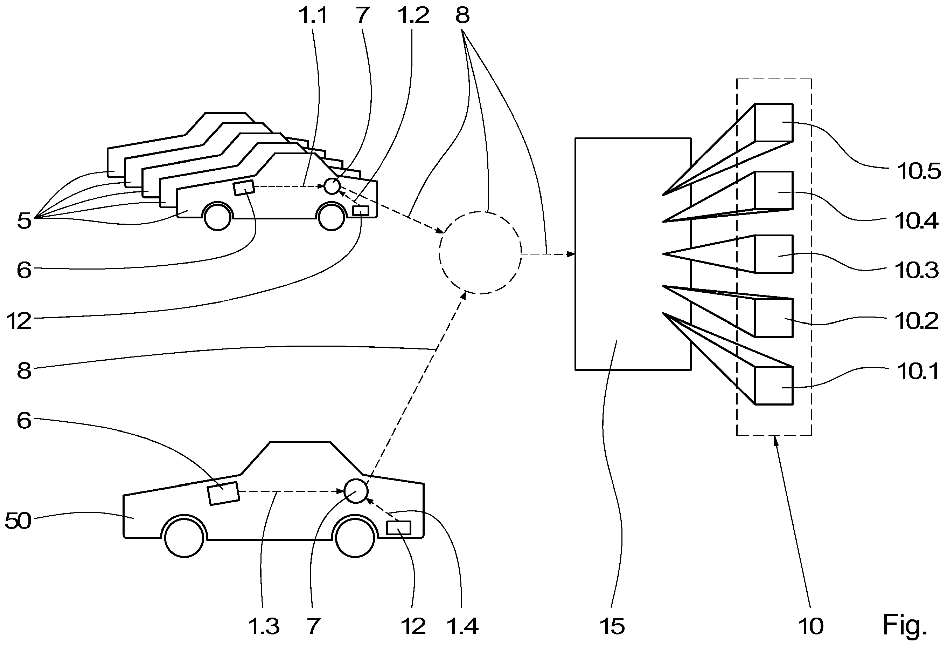

Im Folgenden wird ein Ausführungsbeispiel der Erfindung anhand der schematischen Figur näher erläutert, wobei gleiche oder ähnliche Elemente mit dem gleichen Bezugszeichen versehen sind. Die einzige Figur zeigt ein Systemschaubild für ein erfindungsgemäßes Verfahrens zum Typisieren von Kraftfahrzeugen.

Zum Aufbau einer Datenbank wird mit einer Vielzahl von Fahrzeugen bzw. Kraftfahrzeugen 5 ein Feldversuch durchgeführt. Die Kraftfahrzeuge 5 sind mit zumindest hinsichtlich ihrer Funktion vergleichbaren Getrieben und vorzugsweise Automatikgetrieben ausgerüstet. Mittels in den Kraftfahrzeugen 5 des Feldversuchs vorhandener Datenerfassungseinrichtungen 6 werden an dem jeweiligen Kraftfahrzeug 5 Getriebedaten messtechnisch erfasst. Getriebedaten in diesem Sinne sind solche Daten, welche von Relevanz sind für das Reale, also das in der Fahrpraxis festgestellte Schaltverhalten der Getriebe, welche in den Kraftfahrzeugen 5 des Feldversuchs verbaut sind.

Die durch die Datenerfassungseinrichtungen 6 erfassten Messdaten werden über einen Datentransfer 1.1 an ein in dem jeweiligen Kraftfahrzeug 5 angeordnetes Telemetrie-Modul 7 übermittelt. Ferner werden Signale zur Fahrzeugposition, z. B. GPS-Signale, von einem Positionsdaten-Modul 12 über einen Datentransfer 1.2 an das Telemetrie-Modul 7 übermittelt.

Das Telemetrie-Modul 7 kommuniziert über ein allgemeines oder anwendungsspezifisches Kommunikationsnetz 8 mit einer Datenverarbeitung 15. Auf diesem Kommunikationsweg werden nicht nur die in dem jeweiligen Fahrzeug 5 gesammelten Getriebedaten übermittelt, sondern ein Datensatz, der sich aus den Getriebedaten, den Positionsdaten sowie einer dem jeweiligen Fahrzeug 5 zugeordneten Identifikation zusammensetzt.

Die Datenverarbeitung 15 errechnet aus den mittels des Kommunikationsnetzes 8 übermittelten Getriebedaten Durchschnittswerte sowie die Größe und Häufigkeit von Abweichungen von den Durchschnittswerten. Aufgrund der Vielzahl an dem Feldversuch beteiligter Fahrzeuge 5 wird eine große Menge und Varianz an Getriebedaten erfasst und steht zur Auswertung zur Verfügung.

Auf Grundlage der Durchschnittswerte sowie der Größe und der Häufigkeit der Abweichungen von den Durchschnittswerten erstellt der Fahrzeughersteller oder der Getriebelieferant, eventuell unter Einsatz der Datenverarbeitung 15, eine Klassifikation 10 aus Profilen 10.1 - 10.5. In der einzigen Figur wiedergegeben ist eine Klassifikation, welche fünf Profile 10.1 - 10.5 umfasst.

Dabei steht ein mittleres Standardprofil 10.3 für eine eher durchschnittliche, z. B. primär komfortorientierte Schaltcharakteristik. Ein anderes der Profile 10.1 - 10.5 kann für einen Fahrstil stehen, der deutlich ökologische Aspekte berücksichtigt und sich z. B. durch ein besonderes treibstoffeffizientes Fahren auszeichnet. Ein wiederum anderes der Profile 10.1 - 10.5 kann für eine eher sportlich orientierte Schaltcharakteristik des Getriebes stehen, z. B. mit relativ kurzen Schaltvorgängen und bei allgemein höherer Motordrehzahl.

Die Klassifikation 10 mit unterschiedlichen Profilen 10.1 - 10.5 bietet die Voraussetzung, neue, einzelne Fahrzeuge bzw. Kraftfahrzeuge zu typisieren. Auf der Zeichnung dargestellt ist ein solches weiteres bzw. einzelnes Fahrzeug 50. Dieses ist ebenfalls eingerichtet, mittels einer in dem einzelnen Fahrzeug 50 vorhandenen Datenerfassungseinrichtung 6 Getriebedaten messtechnisch zu erfassen, welche von Relevanz für das reale Schaltverhalten des Getriebes in der Fahrpraxis sind. Über das Telemetrie-Modul 7 des einzelnen Fahrzeugs 50 werden die Getriebedaten des einzelnen Fahrzeugs 50 sowie Positionsdaten des Positionsdaten-Moduls 12, z. B GPS-Daten, über einen jeweiligen Datentransfer 1.3, 1.4 zu der Datenverarbeitung 15 übermittelt.

Ein Prozessor der Datenverarbeitung 15 errechnet aus den Getriebedaten sowie Positionsdaten mindestens einen für das einzelne Fahrzeug 50 individuellen Kennwert. In Abhängigkeit von der Größe dieses Kennwerts führt der Prozessor der Datenverarbeitung eine datentechnische Zuordnung des einzelnen Fahrzeugs 50 zu einem der Profile 10.1 - 10.5 der Klassifikation 10 durch, d. h. das einzelne Fahrzeug 50 wird in Bezug auf die durch die Klassifikation repräsentierte Bandbreite möglicher Getriebecharakteristiken in ein bestimmtes Profil eingruppiert und somit typisiert.

Um die Getriebedaten und die Positionsdaten eindeutig dem jeweiligen einzelnen Fahrzeug 50 zuzuordnen, und zwar sowohl bei der Kommunikation über das Kom-munikationsnetz 8 als auch im Rahmen der Datenanalyse im Prozessor der Datenverarbeitung 15, erfolgt die Datenübermittlung mittels des Kommunikationsnetzes 8 und die Datenverarbeitung 15 unter Verwendung eines Datensatzes. Dieser umfasst die Getriebedaten, die Positionsdaten und eine individuelle, d. h. nur für das jeweilige einzelne Fahrzeug 50 gültige und damit eindeutige Kennung.

Auch der von dem Prozessor der Datenverarbeitung 15 errechnete Kennwert wird zusammen mit der dem jeweiligen einzelnen Fahrzeug 50 zugeordneten Kennung als Datensatz gespeichert. Auf diesen Datensatz ist ein Zugriff nur nach vorheriger Autorisierung möglich, um einen Datenmissbrauch auszuschließen.

Der Vorteil des Verfahrens besteht darin, dem Fahrer des typisierten Fahrzeugs 50 eine individuell auf sein Fahrzeug 50 abgestimmte Parametrierung seines Fahrzeuggetriebes anbieten zu können. Diese Möglichkeit kann dem Fahrer z. B. als Upgrade-Service angeboten werden in Form eines Software-Pakets mit Änderungsdaten der elektronischen Getriebesteuerung.

Dabei erstellt der Fahrzeughersteller oder der Getriebehersteller Fahrerprofile mit Schwerpunkten wie Verbrauchsreduzierung, sportlicher Fahrweise oder auf Haltbarkeit ausgerichteter Fahrweise. Ferner kann durch eine effizienzorientierte Getriebeparametrierung zum Erreichen niedriger Emissionen an Kohlendioxyd und Stickstoffoxyden beigetragen werden. Abhängig von den Vorlieben des einzelnen Fahrers liegt der mit der individuellen Getriebeparametrierung bzw. Änderung oder Anpassung der Getriebesteuerung erzielte Erfolg auch z. B. in einem erhöhten Komfort beim Fahren.

Ferner besteht die Möglichkeit, die Ursachen von Fehlerquellen in Fahrzeuggetrieben besser einzuordnen. Aufgrund der aus den Getriebedaten durch Analyse errechneten Kennwerte lassen sich bestimmte Getriebeprobleme bei der Ursachenforschung ausschließen, was wiederum hilft, Zeit für technische Analysen einzusparen.

Von Vorteil kann es sein, dem Fahrer des jeweiligen Fahrzeugs 50 die Anpassung der Getriebesteuerung entsprechend dem ermittelten Profil zunächst testweise anzubieten, indem z. B. entsprechende Getriebeparameter auf die elektronische Getriebesteuerung des Fahrzeugs 50 überspielt und darin programmiert werden. Falls der Fahrer nach einer gewissen Testphase den erhofften oder gewünschten Effekt nicht zu spüren bekommt, lässt sich durch erneute Änderung der Getriebesteuerung wieder die Standard-Konfiguration einstellen.

Die erfassten Getriebedaten können auch herstellerseitig genutzt werden, um das Getriebe für dessen weitere Produktion zu optimieren und z.B. an weitere oder neue Marktanforderungen anzupassen.

### Bezugszeichen

- 1.1: Datentransfer
- 1.2: Datentransfer
- 1.3: Datentransfer
- 1.4: Datentransfer
- 5: Kraftfahrzeug
- 6: Datenerfassungseinrichtung
- 7: Telemetrie-Modul
- 8: Kommunikationsnetz
- 12: Positionsdaten-Modul
- 15: Datenverarbeitung
- 10: Klassifikation
- 10.1: Profil
- 10.2: Profil
- 10.3: Profil
- 10.4: Profil
- 10.5: Profil
- 50: Fahrzeug

## Patentansprüche

1. Verfahren zum Typisieren von Kraftfahrzeugen, bei dem
- bei einer Vielzahl von Kraftfahrzeugen (5), welche mit zumindest hinsichtlich ihrer Funktion vergleichbaren Getrieben ausgerüstet sind, in den Kraftfahrzeugen (5) vorhandene Datenerfassungseinrichtungen (6) Getriebedaten messtechnisch erfassen, welche im realen Fahrbetrieb von Relevanz für das Schaltverhalten der Getriebe sind,
- eine Datenverarbeitung (15) unter Verwendung der erfassten Getriebedaten Durchschnittswerte sowie die Größe und Häufigkeit von Abweichungen von den Durchschnittswerten errechnet,
- auf Grundlage der Durchschnittswerte sowie der Größe und Häufigkeit der Abweichungen von den Durchschnittswerten eine Klassifikation (10) umfassend ein Standardprofil (10.3) sowie mindestens zwei weitere Profile (10.1, 10.2, 10.4. 10.5) neben dem Standardprofil (10.3) erstellt werden, wobei jedes Profil (10.1 - 10.5) eine Kombination charakteristischer Getriebeparameter umfasst und wobei neben dem Standardprofil (10.3) die weiteren Profile (10.1, 10.2, 10.4, 10.5) mit Schwerpunkt Verbrauchsreduzierung und mit Schwerpunkt sportliche Fahrweise erstellt werden,
- und wobei die Datenverarbeitung (15) weiter eingerichtet ist, neben den Getriebedaten auch Fahrzeug-Positionsdaten zu verarbeiten, wobei die Fahrzeug-Positionsdaten aus über das Betriebsintervall oder die Laufleistung des einzelnen Fahrzeugs (50) aufgezeichneten Positionssignalen abgeleitet sind,
- zur Typisierung eines einzelnen Fahrzeugs (50) eine darin vorhandene Datenerfassungseinrichtung (6) über ein bestimmtes Betriebsintervall und/oder eine bestimmte Laufleistung des einzelnen Fahrzeugs (50) Getriebedaten messtechnisch erfasst, welche von Relevanz für das tatsächliche Schaltverhalten des Getriebes über das Betriebsintervall bzw. über die Laufleistung sind,
- die Datenverarbeitung (15) aus den in dem einzelnen Fahrzeug (50) erfassten Getriebedaten und den Fahrzeug-Positionsdaten mindestens einen dem einzelnen Fahrzeug (50) zugeordneten Kennwert ermittelt, und die Datenverarbeitung (15) das einzelne Fahrzeug (50) in Abhängigkeit von der Größe des Kennwerts durch Zuordnung zu einem der Profile (10.1 - 10.5) der Klassifikation (10) typisiert,
- und wobei eine individuelle Anpassung einer Getriebesteuerung des Fahrzeugs (50) aufgrund der Typisierung erfolgt.

2. Verfahren nach einem der vorangehenden Ansprüche, **dadurch gekennzeichnet, dass** die erfassten Getriebedaten Daten
- zu Lastzuständen in den einzelnen Fahrstufen des Getriebes
- und/oder zu Temperaturen
- und/oder zu Schaltvorgängen einschließlich deren Zeitpunkten
- und/oder zur Ölversorgung des Getriebes
- und/oder zu Schwingungen oder Geräuschen in Getriebebauteilen
- und/oder zur mechatronischen Getriebesteuerung
umfassen.

3. Verfahren nach einem der vorangehenden Ansprüche, **dadurch gekennzeichnet, dass** die Übermittlung der erfassten Getriebedaten von dem einzelnen Fahrzeug (50) zu der Datenverarbeitung (15) über ein Telemetrie-Modul (7) erfolgt, mit dem das einzelne Fahrzeug (50) ausgerüstet ist.

4. Verfahren nach Anspruch 3 in Verbindung mit Anspruch 1, **dadurch gekennzeichnet, dass** auch die Übermittlung der Positionsdaten über das Telemetrie-Modul (7) erfolgt.

5. Verfahren nach einem der vorangehenden Ansprüche, **dadurch gekennzeichnet, dass** bei der Ermittlung des für das einzelne Fahrzeug (50) individuellen Kenn-werts
- Daten zur Art des im Fahrzeug verbauten Antriebs
- und/oder Daten zur Nennleistung des im Fahrzeug verbauten Antriebs
- und/oder Daten zu gefahrenen Strecken
- und/oder Daten zu Tempobegrenzungen auf den gefahrenen Strecken
- und/oder Daten zu Fahrbahnbelägen auf den gefahrenen Strecken verarbeitet werden.

6. Verfahren nach einem der vorangehenden Ansprüche, **dadurch gekennzeichnet, dass** der dem jeweiligen Fahrzeug (50) zugeordnete Kennwert zusammen mit einer dem jeweiligen Fahrzeug (50) zugeordneten Identifikation als ein Datensatz gespeichert wird.

7. System zum Typisieren von Kraftfahrzeugen eingerichtet zur Durchführung des Verfahrens nach Anspruch 1, umfassend
- in einer Vielzahl von Kraftfahrzeugen (5), welche mit zumindest hinsichtlich ihrer Funktion vergleichbaren Getrieben ausgerüstet sind, angeordneten Datenerfassungseinrichtungen (6), welche eingerichtet sind, Getriebedaten messtechnisch zu erfassen, welche im realen Fahrbetrieb von Relevanz für das Schaltverhalten der Getriebe sind,
- eine Datenverarbeitung (15), welche eingerichtet ist, unter Verwendung der erfassten Getriebedaten Durchschnittswerte sowie die Größe und Häufigkeit von Abweichungen von den Durchschnittswerten zu errechnen,
- eine Klassifikation (10), umfassend ein Standardprofil (10.3) sowie mindestens zwei weitere Profile (10.1, 10.2, 10.4, 10.5) neben dem Standardprofil (10.3) wobei die Klassifikation auf Grundlage der Durchschnittswerte sowie der Größe und Häufigkeit der Abweichungen von den Durchschnittswerten erstellt ist, und wobei jedes Profil (10.1 - 10.5) eine Kombination charakteristischer Getriebeparameter umfasst und wobei neben dem Standardprofil (10.3) die weiteren Profile (10.1, 10.2, 10.4, 10.5) mit Schwerpunkt Verbrauchsreduzierung und mit Schwerpunkt sportliche Fahrweise erstellt werden,
- wobei die Datenverarbeitung (15) eingerichtet ist, neben den Getriebedaten auch Fahrzeug-Positionsdaten zu verarbeiten, wobei die Positionsdaten aus über das Betriebsintervall oder die Laufleistung des einzelnen Fahrzeugs (50) aufgezeichneten Positionssignalen abgeleitet sind,
- zur Typisierung eines einzelnen Fahrzeugs (50) eine darin vorhandene Datenerfassungseinrichtung (6), welche eingerichtet ist, über ein bestimmtes Betriebsintervall und/oder eine bestimmte Laufleistung des einzelnen Fahrzeugs (50) Getriebedaten messtechnisch zu erfassen, welche von Relevanz für das tatsächliche Schaltverhalten des Getriebes über das Betriebsintervall bzw. über die Laufleistung sind,
- wobei die Datenverarbeitung (15) ferner dazu eingerichtet ist, aus den in dem einzelnen Fahrzeug (50) erfassten Getriebedaten und Fahrzeug-Positionsdaten mindestens einen dem einzelnen Fahrzeug (50) zugeordneten Kennwert zu ermitteln, und das einzelne Fahrzeug (50) in Abhängigkeit von der Größe des Kennwerts durch Zuordnung zu einem der Profile (10.1 - 10.5) der Klassifikation (10) zu typisieren.

8. System nach Anspruch 6 oder 7, **dadurch gekennzeichnet, dass** die Übermittlung der erfassten Getriebedaten von dem einzelnen Fahrzeug (50) zu der Datenverarbeitung (15) über ein Telemetrie-Modul (7) erfolgt, mit dem das einzelne Fahrzeug (50) ausgerüstet ist.

9. System nach Anspruch 8, **dadurch gekennzeichnet, dass** auch die Übermittlung der Positionsdaten über das Telemetrie-Modul (7) erfolgt.

10. System nach einem der Ansprüche 7 - 9, **dadurch gekennzeichnet, dass** der dem jeweiligen Fahrzeug (50) zugeordnete Kennwert zusammen mit einer dem jeweiligen Fahrzeug (50) zugeordneten Identifikation als ein Datensatz gespeichert wird.

## Claims

1. Method for classifying motor vehicles by type, in which
- given a multiplicity of motor vehicles (5) equipped with gearboxes that are comparable at least with respect to their function, data-acquisition devices (6) present in the motor vehicles (5) use measuring instruments to acquire gearbox data of relevance for the gear-shifting behaviour of the gearboxes during real driving operations,
- a data processing system (15) uses the acquired gearbox data to calculate average values and the magnitude and frequency of deviations from the average values,
- on the basis of the average values and the magnitude and frequency of the deviations from the average values, a classification (10) comprising a standard profile (10.3) and at least two further profiles (10.1, 10.2, 10.4, 10.5) along with the standard profile (10.3) is created, wherein each profile (10.1 - 10.5) comprises a combination of characteristic gearbox parameters and wherein, along with the standard profile (10.3), the further profiles (10.1, 10.2, 10.4, 10.5) are created with the emphasis on reducing consumption and with the emphasis on a sporty driving style,
- and wherein the data processing system (15) is further set up to process along with the gearbox data also vehicle position data, wherein the vehicle position data are derived from position signals recorded over the operating interval or the mileage of the individual vehicle (50),
- for classifying an individual vehicle (50) by type, a data-acquisition device (6) present in it uses measuring instruments to acquire over a certain operating interval and/or a certain mileage of the individual vehicle (50) gearbox data of relevance for the actual gear-shifting behaviour of the gearbox over the operating interval or over the mileage,
- the data processing system (15) determines at least one characteristic value assigned to the individual vehicle (50) from the gearbox data and the vehicle position data acquired in the individual vehicle (50), and the data processing system (15) classifies the individual vehicle (50) by type in dependence on the magnitude of the characteristic value by assignment to one of the profiles (10.1 - 10.5) of the classification (10),
- and wherein an individual adaptation of a gearbox control of the vehicle (50) takes place on the basis of the classification by type.

2. Method according to one of the preceding claims, **characterized in that** the acquired gearbox data comprise data
- relating to load conditions in the individual drive positions of the gearbox
- and/or relating to temperatures
- and/or relating to gear-shifting operations including their times
- and/or relating to the oil supply to the gearbox
- and/or relating to vibrations or noises in gearbox components
- and/or relating to the mechatronic gearbox control.

3. Method according to one of the preceding claims, **characterized in that** the transmission of the acquired gearbox data from the individual vehicle (50) to the data processing system (15) takes place by way of a telemetry module (7) with which the individual vehicle (50) is equipped.

4. Method according to Claim 3 in conjunction with Claim 1, **characterized in that** the transmission of the position data also takes place by way of the telemetry module (7).

5. Method according to one of the preceding claims, **characterized in that**, in the determination of the characteristic value that is individual to the individual vehicle (50),
- data relating to the type of drive installed in the vehicle
- and/or data relating to the rated power of the drive installed in the vehicle
- and/or data relating to routes travelled
- and/or data relating to speed limits on the routes travelled
- and/or data relating to road surfaces on the routes travelled are processed.

6. Method according to one of the preceding claims, **characterized in that** the characteristic value assigned to the respective vehicle (50) is stored together with an identification assigned to the respective vehicle (50) as a data set.

7. System for classifying motor vehicles by type that is set up for carrying out the method according to Claim 1, comprising
- data-acquisition devices (6), which are arranged in a multiplicity of motor vehicles (5) equipped with gearboxes that are comparable at least with respect to their function and are set up to acquire by means of measuring instruments gearbox data of relevance for the gear-shifting behaviour of the gearboxes during real driving operations,
- a data processing system (15), which is set up to calculate average values and the magnitude and frequency of deviations from the average values by using the acquired gearbox data,
- a classification (10), comprising a standard profile (10.3) and at least two further profiles (10.1, 10.2, 10.4, 10.5) along with the standard profile (10.3), wherein the classification is created on the basis of the average values and the magnitude and frequency of the deviations from the average values, and wherein each profile (10.1 - 10.5) comprises a combination of characteristic gearbox parameters and wherein, along with the standard profile (10.3), the further profiles (10.1, 10.2, 10.4, 10.5) are created with the emphasis on reducing consumption and with the emphasis on a sporty driving style,
- wherein the data processing system (15) is set up to process along with the gearbox data also vehicle position data, wherein the position data are derived from position signals recorded over the operating interval or the mileage of the individual vehicle (50),
- for classifying an individual vehicle (50) by type, a data-acquisition device (6) present in it, which is set up to acquire by means of measuring instruments over a certain operating interval and/or a certain mileage of the individual vehicle (50) gearbox data of relevance for the actual gear-shifting behaviour of the gearbox over the operating interval or over the mileage,
- wherein the data processing system (15) is further set up to determine at least one characteristic value assigned to the individual vehicle (50) from the gearbox data and the vehicle position data acquired in the individual vehicle (50), and to classify the individual vehicle (50) by type in dependence on the magnitude of the characteristic value by assignment to one of the profiles (10.1 - 10.5) of the classification (10).

8. System according to Claim 6 or 7, **characterized in that** the transmission of the acquired gearbox data from the individual vehicle (50) to the data processing system (15) takes place by way of a telemetry module (7) with which the individual vehicle (50) is equipped.

9. System according to Claim 8, **characterized in that** the transmission of the position data also takes place by way of the telemetry module (7).

10. System according to one of Claims 7-9, **characterized in that** the characteristic value assigned to the respective vehicle (50) is stored together with an identification assigned to the respective vehicle (50) as a data set.

## Revendications

1. Procédé pour déterminer le type de véhicules automobiles, dans lequel
- pour une pluralité de véhicules automobiles (5) équipés de boîtes de vitesses au moins fonctionnellement comparables, des dispositifs d'acquisition de données (6) présents dans les véhicules (5) acquièrent par mesure des données de boîte de vitesses pertinentes pour le comportement de changement de vitesses dans un mode de conduite réel,
- un traitement de données (15) calcule, à partir des données de boîte de vitesses acquises, des valeurs moyennes ainsi que l'ampleur et la fréquence des écarts par rapport aux valeurs moyennes,
- sur la base des valeurs moyennes ainsi que de l'ampleur et de la fréquence des écarts, une classification (10) est établie, comprenant un profil standard (10.3) ainsi qu'au moins deux autres profils (10.1, 10.2, 10.4, 10.5) en plus du profil standard (10.3), chaque profil (10.1 - 10.5) comprenant une combinaison de paramètres caractéristiques de la boîte de vitesses, et les autres profils (10.1, 10.2, 10.4, 10.5) étant établis, en plus du profil standard (10.3), avec un accent sur la réduction de la consommation et un accent sur un style de conduite sportive,
- et le traitement de données (15) étant en outre conçu pour traiter également des données de position du véhicule en plus des données de boîte de vitesses, les données de position du véhicule étant dérivées de signaux de position acquis sur l'intervalle de fonctionnement ou le kilométrage du véhicule individuel (50),
- pour la détermination de type d'un véhicule individuel (50), un dispositif d'acquisition de données (6) présent dans celui-ci acquiert par mesure, sur un intervalle de fonctionnement déterminé et/ou un kilométrage déterminé du véhicule individuel (50), des données de boîte de vitesses pertinentes pour le comportement de changement de vitesses réel de la boîte de vitesses sur l'intervalle de fonctionnement ou sur le kilométrage,
- le traitement de données (15) détermine, à partir des données de boîte de vitesses et des données de position du véhicule acquises dans le véhicule individuel (50), au moins une valeur caractéristique associée au véhicule individuel (50), et le traitement de données (15) détermine le type du véhicule individuel (50) en fonction de l'ampleur de la valeur caractéristique, en l'associant à l'un des profils (10.1 - 10.5) de la classification (10),
- et un ajustement individuel d'une commande de boîte de vitesses du véhicule (50) est effectué en fonction de la détermination de type.

2. Procédé selon l'une des revendications précédentes, **caractérisé en ce que** les données de boîte de vitesses acquises comprennent des données relatives
- aux états de charge pour les différents rapports de la boîte de vitesses
- et/ou aux températures
- et/ou aux opérations de changement de vitesses, y compris leurs instants
- et/ou à l'alimentation en huile de la boîte de vitesses
- et/ou aux vibrations ou bruits dans les composants de la boîte de vitesses
- et/ou à la commande mécatronique de la boîte de vitesses.

3. Procédé selon l'une quelconque des revendications précédentes, **caractérisé en ce que** la transmission des données de boîte de vitesses acquises, du véhicule individuel (50) vers le traitement de données (15), s'effectue par l'intermédiaire d'un module de télémétrie (7) dont est équipé le véhicule individuel (50).

4. Procédé selon la revendication 3 en liaison avec la revendication 1, **caractérisé en ce que** la transmission des données de position s'effectue également par l'intermédiaire du module de télémétrie (7).

5. Procédé selon l'une quelconque des revendications précédentes, **caractérisé en ce que**, lors de la détermination de la valeur caractéristique individuelle pour le véhicule individuel (50), le traitement porte sur
- des données relatives au type de propulsion installé dans le véhicule
- et/ou des données relatives à la puissance nominale du système de propulsion installé dans le véhicule
- et/ou des données relatives aux trajets parcourus
- et/ou des données relatives à la limitation de vitesses sur les trajets parcourus
- et/ou des données relatives aux revêtements de chaussée sur les trajets parcourus.

6. Procédé selon l'une quelconque des revendications précédentes, **caractérisé en ce que** la valeur caractéristique associée au véhicule (50) respectif, ainsi qu'une identification associée au véhicule (50) respectif, sont mémorisées sous la forme d'un ensemble de données.

7. Système pour déterminer le type de véhicules automobiles, destiné à mettre en œuvre le procédé selon la revendication 1, comprenant
- dans une pluralité de véhicules automobiles (5) équipés de boîtes de vitesses au moins fonctionnellement comparables, des dispositifs d'acquisition de données (6) présents, qui sont conçus pour acquérir par mesure des données de boîte de vitesses pertinentes pour le comportement de changement de vitesses dans un mode de conduite réel,
- un traitement de données (15), conçu pour calculer, à partir des données de boîte de vitesses acquises, des valeurs moyennes ainsi que l'ampleur et la fréquence des écarts par rapport aux valeurs moyennes,
- une classification (10), comprenant un profil standard (10.3) ainsi qu'au moins deux autres profils (10.1, 10.2, 10.4, 10.5) en plus du profil standard (10.3), la classification étant établie sur la base des valeurs moyennes ainsi que de l'ampleur et de la fréquence des écarts par rapport aux valeurs moyennes, et chaque profil (10.1 - 10.5) comprenant une combinaison de paramètres caractéristiques de la boîte de vitesses, et les autres profils (10.1, 10.2, 10.4, 10.5) étant établis, en plus du profil standard (10.3), avec un accent sur la réduction de la consommation et un accent sur le style de conduite sportive,
- le traitement de données (15) étant conçu pour traiter également des données de position du véhicule en plus des données de boîte de vitesses, les données de position étant dérivées de signaux de position acquis sur l'intervalle de fonctionnement ou le kilométrage du véhicule individuel (50),
- pour la détermination de type d'un véhicule individuel (50), un dispositif d'acquisition de données (6) présent dans celui-ci est conçu pour acquérir par mesure, sur un intervalle de fonctionnement déterminé et/ou un kilométrage déterminé du véhicule individuel (50), des données de boîte de vitesses pertinentes pour le comportement de changement de vitesses réel de la boîte de vitesses sur l'intervalle de fonctionnement et/ou sur le kilométrage,
- le traitement de données (15) étant en outre conçu pour déterminer, à partir des données de boîte de vitesses et des données de position du véhicule acquises dans le véhicule individuel (50), au moins une valeur caractéristique associée au véhicule individuel (50), et pour déterminer le type du véhicule individuel (50) en fonction de l'ampleur de la valeur caractéristique, en l'associant à l'un des profils (10.1 - 10.5) de la classification (10).

8. Système selon la revendication 6 ou 7, **caractérisé en ce que** la transmission des données de boîte de vitesses acquises, du véhicule individuel (50) vers le traitement de données (15), s'effectue par l'intermédiaire d'un module de télémétrie (7) dont est équipé le véhicule individuel (50).

9. Système selon la revendication 8, **caractérisé en ce que** la transmission des données de position s'effectue également par l'intermédiaire du module de télémétrie (7).

10. Système selon l'une quelconque des revendications 7 à 9, **caractérisé en ce que** la valeur caractéristique associée au véhicule (50) respectif, ainsi qu'une identification associée audit véhicule (50), sont mémorisées sous la forme d'un ensemble de données.
